Europäisches Patentamt

European Patent Office

Office européen des brevets

(19)

(11)     **EP 1 105 702 B1**

(12)     **EUROPÄISCHE PATENTSCHRIFT**

(45) Veröffentlichungstag und Bekanntmachung des Hinweises auf die Patenterteilung:
**13.10.2004  Patentblatt 2004/42**

(21) Anmeldenummer: **99944111.6**

(22) Anmeldetag: **12.08.1999**

(51) Int Cl.$^7$: **G01G 19/12**, F16H 59/52

(86) Internationale Anmeldenummer:
**PCT/EP1999/005924**

(87) Internationale Veröffentlichungsnummer:
**WO 2000/011439 (02.03.2000 Gazette 2000/09)**

(54) **VERFAHREN UND EINRICHTUNG ZUR ERMITTLUNG DER MASSE EINES FAHRZEUGES**

METHODS AND DEVICE FOR DETERMINING THE MASS OF A VEHICLE

PROCEDES ET DISPOSITIF POUR DETERMINER LA MASSE D'UN VEHICULE

(84) Benannte Vertragsstaaten:
**DE FR SE**

(30) Priorität: **18.08.1998  DE 19837380**

(43) Veröffentlichungstag der Anmeldung:
**13.06.2001  Patentblatt 2001/24**

(73) Patentinhaber: **ZF FRIEDRICHSHAFEN Aktiengesellschaft**
**88038 Friedrichshafen (DE)**

(72) Erfinder:
• **WOLF, Andreas**
  **D-86213 Ravensburg (DE)**
• **WINKEL, Matthias**
  **D-88250 Wingarten (DE)**
• **RÜCHARDT, Christoph**
  **D-88131 Bodolz (DE)**
• **WENGERT, Bertram**
  **D-88677 Markdorf (DE)**
• **MÜLLER, Jürgen**
  **D-88045 Friedrichshafen (DE)**

(56) Entgegenhaltungen:
| | |
|---|---|
| **EP-A- 0 666 435** | **EP-A- 0 695 930** |
| **WO-A-93/18375** | **US-A- 5 610 372** |

**Beschreibung**

Die Erfindung betrifft Verfahren zur Ermittlung der Masse eines von mindestens einem Antriebsmotor angetriebenen Fahrzeugs sowie eine entsprechend angepasste Einrichtung.

Aus der EP 0 666 435 A2 ist ein derartiges Verfahren bekannt, welches zwei zeitlich versetzte Messungen der vom Antriebsmotor erzeugten Zugkraft und die daraus resultierende Beschleunigung umfaßt. Es wird davon ausgegangen, daß der unbekannte Fahrwiderstand bei zwei aufeinanderfolgenden Messungen im wesentlichen für beide Messungen gleich ist, so daß diese unbekannten Größen herausgekürzt werden können. Bei diesem bekannten Verfahren werden sowohl während einer Zugkraft-Phase als auch während einer zugkraftfreien Phase, während der eine Kupplung zum Zweck einer Gangschaltung eines Stufenwechselgetriebes geöffnet ist, jeweils ein Wert eines Raddrehmoments sowie ein Wert einer Fahrzeugbeschleunigung ermittelt, woraus die aktuelle Masse des Fahrzeugs berechenbar ist. Ein derartiges Verfahren kann vorteilhaft bei Fahrzeugen mit automatisierten Getrieben innerhalb einer Fahrstrategie verwendet werden, um beispielsweise bereits vor einer Schaltung errechnen zu können, ob die Zugkraft im neuen Gang noch ausreichend wäre, wobei der Beladungszustand und damit die Fahrzeugmasse entscheidenden Einfluß hat. Für derartige Anwendungen ist eine hohe Genauigkeit des Verfahrens notwendig.

Vorteilhaft bei diesem bekannten Verfahren ist, daß das Verfahren für den Fahrer nicht spürbar selbsttätig im Hintergrund ablaufen kann. Es werden die während eines Gangwechsels eines Stufenwechselgetriebes ohnehin erzeugten Zustände, zugkraftfreie Phase und Zugkraft-Phase, als definierte Randbedingungen für die Messungen ausgenutzt. Nachteilig bei diesem Verfahren ist, daß die zur Berechnung herangezogenen Werte der Raddrehmomente bzw. der Beschleunigungen meßtechnisch bestimmten Streuungen unterliegen und daher zu ungenauen Ergebnissen führen.

Das in der WO 93/18375 beschriebene Verfahren beruht ebenfalls auf dem Prinzip zweier zeitlich versetzter Messungen von Zugkraft und Bewegungsgrößen. Um Gravitationseinflüsse herauszurechnen, wird vorgeschlagen, daß ein Fahrer zur Durchführung der Messung zweimal die identische Strecke mit unterschiedlicher Zugkraft-Vorgabe durchfährt. Dies ist aufgrund praktischer Probleme in einem realen Fahrzeugeinsatz im Straßenverkehr nur schwer durchführbar. Alternativ wird vorgeschlagen, daß eine Strecke mit genau bekanntem Streckenprofil durchfahren wird. Auch dies ist problematisch, da nicht jedem Fahrzeugführer eine solche Strecke zur Verfügung steht und der Aufwand für eine solche Messung für praktische Anwendungen nicht akzeptabel ist.

Aufgabe der Erfindung ist es daher, ein gattungsgemäßes Verfahren zur Bestimmung der Masse eines Fahrzeugs zu entwickeln, das ohne Aufwand für den Fahrer selbsttätig, für den Fahrer nicht spürbar, abläuft und dabei eine höhere Genauigkeit erzielt als ein bekanntes Verfahren. Erfindungsgemäß wird diese Aufgabe durch ein Verfahren mit den Merkmalen eines der unabhängigen Ansprüche 1 oder 2 gelöst. Eine angepasste Einrichtung ist im Anspruch 19 angegeben.

Das Verfahren nach Anspruch 1 eignet sich insbesondere für automatisierte Getriebe, bei denen die Zugkraft während einer Gangschaltung unterbrochen ist.

In den beiden Datenerfassungszeiträumen, deren Dauer unterschiedlich sein kann, jedoch jeweils größer ist als eine bestimmte Mindestdauer, und von denen der eine innerhalb der zugkraftfreien Phase während einer Schaltung liegt und der andere während einer Zugkraft-Phase vor oder nach der Schaltung, lassen sich die Werte der Zugkraft-Größe und der Bewegungs-Größe mit sehr hoher Genauigkeit ermitteln, woraus insgesamt eine hohe Genauigkeit des Verfahrens resultiert.

Dem Verfahren gemäß Anspruch 1 liegt folgende Gleichung zugrunde:

$$M_{Fzg} = \frac{\int_{t_0}^{t_1} F_{Zug}\, dt \; - M_{Gang}\,(v_1 - v_0)}{(v_1 - v_0 - v_3 + v_2)}$$

Darin sind:

$M_{Fzg}$  die zu ermittelnde Fahrzeugmasse in kg,
$F_{Zug}$  die Zugkraft bzw. das zum Rad gerechnete Motormoment in N,
$M_{gang}$  eine Korrekturgröße, die der Summe der Massenträgheitsmomente von Motor, Kupplung und Stufenwechselgetriebe, reduziert auf die translatorische Bewegung, des Fahrzeug entspricht in kg,
$t_0, t_1$  Anfangs- und Endzeitpunkt der Zugkraft-Phase,
$v_0, v_1$  die Geschwindigkeiten des Fahrzeugs zu Beginn und am Ende der Zugkraft-Phase in m/s,

$v_2$, $v_3$     die Geschwindigkeiten zu Beginn und am Ende der zugkraftfreien Phase in m/s.

Das Integral über die Zugkraft von $t_2$ nach $t_3$ taucht in dieser Gleichung nicht auf, da $F_{Zug}$ während der zugkraftfreien Phase Null ist.

Es hat sich gezeigt, daß die Ergebnisse durch den Korrekturfaktor $M_{Gang}$ wesentlich verbessert werden konnten, da die antriebsseitigen Massenträgsmomente, insbesondere in den kleinen Gangstufen, einen erheblichen Einfluß haben. Eine Form dieser Gleichung, die für eine Programmierung in einer elektronischen Getriebesteuerung geeignet ist und in der das in der Gleichung enthaltene Integral durch ein zeitdiskretes Näherungsverfahren ersetzt ist, ist durch folgende Gleichung gegeben:

$$ms\_fzg\_akt =$$

$$\frac{I_{01} - ms\_fzg\_korr \cdot (v\_fzg\_filt(k_1) - v\_fzg\_filt(k_0))}{(v\_fzg\_filt(k_1) - v\_fzg\_filt(k_0) - k\_t0123 \cdot (v\_fzg\_filt(k_3) - v\_fzg\_filt(k_2)))}$$

$$I_{01} = \#t\_abt \cdot \#k\_korr\_ms \cdot \sum_{k_0 + 1}^{k_1} (f\_zs(k))$$

Darin sind:

| | |
|---|---|
| ms_fzg_akt | Aktuell berechnete Fahrzeugmasse |
| f_zs(k) | Zug-/Schubkraft am Rad zum Zeitschritt k |
| ms_fzg_korr | Gangabhängige Korrekturmasse (siehe 2.1.6) |
| k_t0123 | Verhältnisfaktor der Zeithorizonte |
| $k_0$ | Zeitschritt zu Beginn des Zeitfensters ($t_0$ - $t_1$) der Zugkraftphase |
| $k_1$ | Letzter Zeitschritt des Zeitfensters ($t_0$ - $t_1$) der Zugkraftphase |
| $k_2$ | Zeitschritt zu Beginn des Zeitfensters ($t_2$ - $t_3$) der Zugkraftphase |
| $k_3$ | Letzter Zeitschritt des Zeitfensters ($t_2$ - $t_3$) der Zugkraftphase |
| v_fzg_filt (k) | Gefilterte Fahrzeuggeschwindigkeit zum Zeitschritt $k$ |
| #t_abt | Abtastschrittweite (Parameter) . |
| #k_korr_ms | Korrekturfaktor zur Nachkorrektur des Motor- bzw. Antriebsstrangwirkungsgrads |
| $I_{01}$ | Numerisch berechnetes Integral der Zugkraft im Zeitraum ($t_0$ - $t_1$). |

Es hat sich gezeigt, daß das Integral über die Zugkraft während der Zugkraft-Phase (siehe erste Gleichung) mit hoher Genauigkeit durch das zeitdiskrete Verfahren angenähert werden kann. Die Ermittlung der Geschwindigkeiten zu Beginn und am Ende der Datenerfassungszeiträume ist ebenfalls gut beherrschbar, so daß eine sehr hohe Genauigkeit erzielbar ist.

Das Verfahren gemäß dem unabhängigen Anspruch 2 eignet sich insbesondere für unter Last schaltbare Getriebe. Bei diesen Getrieben ist die Gangzahl üblicherweise geringer, woraus folgt, daß die Stufensprünge bei aufeinanderfolgenden Gängen größer sind.

Unmittelbar vor einer Schaltung ist die Zugkraft also in vielen Fällen deutlich von der Zugkraft unmittelbar nach der Schaltung verschieden. Das Verfahren nach Anspruch 2 nutzt diese kurz aufeinanderfolgenden Zugkraft-Zustände, indem der erste Datenerfassungszeitraum unmittelbar vor einer Gangschaltung liegt, und der zweite Datenerfassungszeitraum unmittelbar nach der Gangschaltung. Der Beginn des ersten Datenerfassungszeitraums kann hierbei beispielsweise durch einen Schaltbefehl ausgelöst werden. Die üblicherweise zwischen Schaltbefehl und Ablauf der Schaltung zum Befüllen der zuschaltenden Kupplungen benötigte Zeit kann somit für die erste Messung genutzt werden.

Zur Berechnung der Fahrzeugmasse mit dem Verfahren gemäß Anspruch 2 dient die folgende Gleichung:

$$M_{Fzg} = \frac{\int_{t_0}^{t_1} F_{Zug}\, dt - \int_{t_2}^{t_3} F_{Zug}\, dt - M_{Gang,t01}(v_1 - v_0) + M_{Gang,t23}(v_3 - v_2)}{(v_1 - v_0 - v_3 + v_2)}$$

Darin sind:

$M_{Fzg}$      die zu ermittelnde Fahrzeugmasse in kg,

$F_{Zug}$      die Zugkraft bzw. das zum Rad gerechnete Motormoment in N,

$M_{gang,t01}$      Korrekturgröße für den im ersten Datenerfassungszeitraum eingelegten Gang, die der Summe der Massenträgheitsmomente von Motor, Kupplung und Stufenwechselgetriebe, reduziert auf die translatorische Bewegung, des Fahrzeugs entspricht in kg,

$M_{gang,t23}$      Korrekturgröße für den im zweiten Datenerfassungszeitraum eingelegten Gang, die der Summe der Massenträgheitsmomente von Motor, Kupplung und Stufenwechselgetriebe, reduziert auf die translatorische Bewegung, des Fahrzeug entspricht in kg,

$t_0, t_1$      Anfangs- und Endzeitpunkt der Zugkraft-Phase,

$v_0, v_1$      die Geschwindigkeiten des Fahrzeugs zu Beginn und am Ende der Zugkraft-Phase in m/s,

$v_2, v_3$      die Geschwindigkeiten zu Beginn und am Ende der zugkraftfreien Phase in m/s.

Das Integral über die Zugkraft von $t_2$ nach $t_3$ ist in dieser Gleichung berücksichtigt, da während der beiden Datenerfassungszeiträume eine Zugkraft anliegt. Die Umsetzung in ein zeitdiskretes Näherungsverfahren kann entsprechend, wie beim Verfahren gemäß Anspruch 1, erfolgen.

Weitere Einzelheiten der Erfindung sowie vorteilhafte Ausgestaltungen werden anhand der beiliegenden Zeichnungen erläutert, wobei

Fig. 1      einen zeitlichen Ablauf der Datenerfassungszeiträume eines erfindungsgemäßen Verfahrens und

Fig. 2      schematisch die Ein-, Ausgangsgrößen und Parameter des der Erfindung zugrunde liegenden Algorithmus zur Massenberechnung

zeigen.

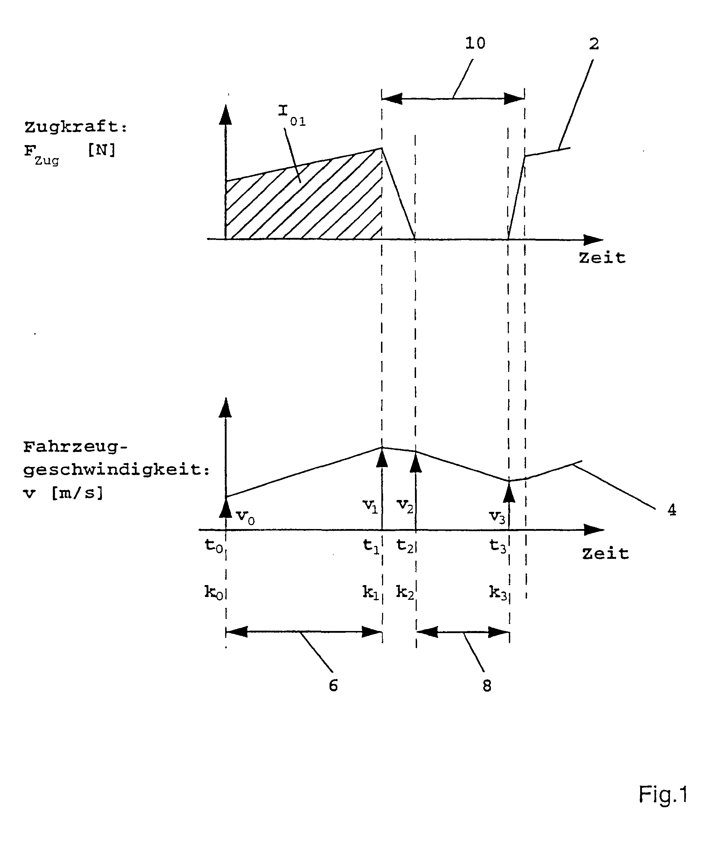

In Fig. 1 ist mit 2 der Graph der Zugkraft und mit 4 der Graph der Fahrzeuggeschwindigkeit innerhalb eines Meßzeitraums, der durch die Anfangszeit $t_0$ und die Endzeit $t_3$ begrenzt ist, dargestellt. Innerhalb dieses Meßzeitraums folgen ein erster Datenerfassungszeitraum 6 während einer Zugkraft-Phase und ein zweiter Datenerfassungszeitraum 8 während einer zugkraftfreien Phase, zeitlich versetzt, aufeinander. Die Zeitpunkte $t_0$ und $t_1$ markieren den Beginn und das Ende des ersten Datenerfassungszeitraums. Die Zeitpunkte $t_2$ und $t_3$ markieren den Beginn und das Ende des zweiten Datenerfassungszeitraums. Während des ersten Datenerfassungszeitraums wird vom Antriebsmotor eine Zugkraft auf die Antriebsräder übertragen, was eine Geschwindigkeitsänderung des Fahrzeugs von $v_0$ nach $v_1$ zur Folge hat. Die Fläche $I_{01}$ entspricht dem zeitlichen Integral der Zugkraft während des ersten Datenerfassungszeitraums 6. Mit dem Beginn der Schaltungsphase 10 endet der erste Datenerfassungszeitraum zum Zeitpunkt $t_1$. Nachdem die Kupplung während des Zeitintervalls $t_1$ nach $t_2$ zum Zweck einer Gang-Schaltung des Stufenwechselgetriebes geöffnet wurde, beginnt zum Zeitpunkt $t_2$ der zweite Datenerfassungszeitraum 8, in dem keine Zugkraft vom Antriebsmotor auf die Antriebsräder übertragen wird. Unter der Wirkung des Fahrwiderstands, der den Roll-, Luft- und Steigungswiderstand enthält, erfährt das Fahrzeug eine Geschwindigkeitsänderung, von $v_2$ nach $v_3$. Zum Zeitpunkt $t_3$ wird die Kupplung wieder geschlossen, so daß im neuen Gang wieder eine Zugkraft übertragen wird. Zur grundsätzlichen Durchführung des Verfahrens ist es nicht erforderlich, daß tatsächlich ein Gangwechsel stattfindet. Es ist jedoch vorteilhaft, wenn die zugkraftfreie Phase, die während eines Gangwechsels anliegt, im Verfahren genutzt wird. Auf diese Weise bleibt das Verfahren für den Fahrer nicht spürbar und kann im Hintergrund ablaufen. Die Dauer der Datenerfassungszeiträume 6, 8 ist größer als eine Mindestdauer, um eine ausreichende Mittelung bei der Integralbildung der Zugkraft zu erreichen, und um eine auswertbare Geschwindigkeitsänderung des Fahrzeugs sicherzustellen.

Wenn, wie in Fig. 1 dargestellt, die Zugkraft-Phase 6 vor der zugkraftfreien Phase 8 liegt, wird die Messung während der Zugkraft-Phase nicht durch Störungen im Antriebsstrang, wie z. B. Schwingungen, die vom Schaltvorgang herrühren, beeinträchtigt. Es ist in diesem Fall nicht erforderlich, ein Abklingen dieser Störungen abzuwarten, wodurch der Abstand der beiden Datenerfassungszeiträume vergrößert würde. Die beiden Datenerfassungszeiträume können so zeitlich sehr dicht beeinanderliegen. Der gesamte Meßzeitraum bleibt kurz, so daß sich auch die Umgebungsbedingungen, wie z. B. Fahrbahnsteigung, nur wenig ändern können.

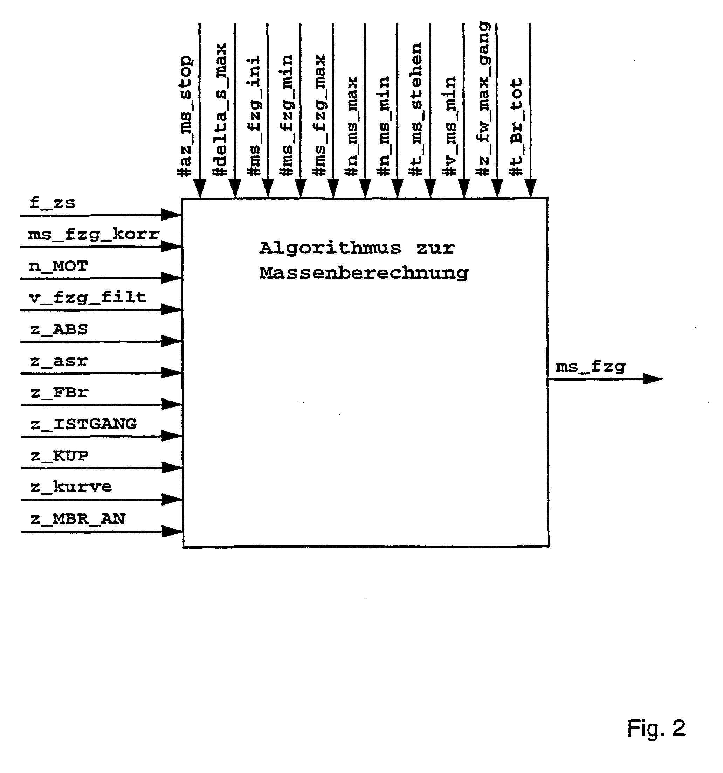

In Fig. 2 sind die Ein-, Ausgangsgrößen und Parameter dargestellt, die im erfindungsgemäßen Verfahren und in dessen weiteren Ausgestaltungen verwendet werden. Die wesentliche Ausgangsgröße des Algorithmus ist die berechnete Fahrzeugmasse ms_fzg. Die Größe f_zs steht für die aktuelle Zugkraft. Diese kann beispielsweise aus einem von einer Motorelektronik bereitgestellten Motormomenten-Signal und der bekannten Übersetzung zwischen Motor und Fahrzeugrad ermittelt werden. Die Größe v_fzg_filt steht für die aktuelle Fahrzeuggeschwindigkeit, die in vorteilhafter Weise mit einem Raddrehzahlsensor eines nicht angetriebenen Rades des Fahrzeugs ermittelt wird, um Einflüsse von Antriebsstrangschwingungen und/oder Radschlupf zu minimieren.

Ausgehend von der Erkenntnis, daß ein Fahrstreckenparameter, wie z. B. Steigung, sich innerhalb einer begrenzten Wegstrecke nur begrenzt ändern kann, ist es vorteilhaft, wenn das Massenberechnungsverfahren nur dann aktiv ist, wenn die während einer Zeitdauer zwischen dem Beginn des ersten und dem Beginn des zweiten Datenerfasungszeitraums zurückgelegte Wegstrecke den Wert #delta_s_max nicht übersteigt.

Die Größe ms_fzg_korr entspricht der gangabhängigen Korrekturgröße für die Berücksichtigung der Massenträgheitsmomente von Motor, Kupplung und Stufenwechselgetriebe. Die Werte dieser Größe können gangabhängig in einem Kennlinienspeicher der elektronischen Getriebesteuerung abgelegt sein.

In einer vorteilhaften Ausgestaltung der Erfindung wird die Massenberechnung nach Einschalten der Zündung des Fahrzeugs, oder wenn eine vorgebbare Stillstandszeit #t_ms_stehen abgelaufen ist, initialisiert, da vor diesen Ereignissen eine Beladungszustandsänderung des Fahrzeugs erfolgt sein kann. Hierbei wird ein Startwert für den Massenberechnungsalgorithmus #ms_fzg_ini gesetzt.

Die Genauigkeit des Verfahrens kann dadurch weiter erhöht werden, daß das Verfahren während eines Fahrzyklus mehrmals durchlaufen wird, wobei jeweils ein Einzelwert für die Fahrzeugmasse ermittelt wird, aus denen anschließend ein Mittelwert gebildet wird. Für die Einzelwerte ist ein Speicher in der elektronischen Steuerung vorgesehen.

In einer möglichen weiteren Ausgestaltung ist vorgesehen, daß die Anzahl der nach einer Initialisierung ermittelten Einzelwerte durch eine vorgebbare maximale Anzahl #az_ms_stop begrenzt wird, und daß im Falle einer Begrenzung der letzte berechnete Mittelwert der Fahrzeugmasse gültig bleibt. Dadurch kann die elektronische Getriebesteuerung, nachdem ein hinreichend genaues Ergebnis der Massenberechnung vorliegt, von der fortlaufenden, weiteren Durchführung des Verfahrens entlastet werden.

Um die Auswirkungen von einzelnen Fehlmessungen zu begrenzen, ist in einer weiteren vorteilhaften Ausgestaltung des Verfahrens ein zulässiger Wertebereich für die ermittelten Einzelwerte durch eine minimale Plausibilitätsgrenze #ms_fzg_min und eine maximale Plausibilitätsgrenze #ms_fzg_max vorgebbar.

Die Genauigkeit einer Einzelmessung ist um so größer, je größer die Zugkraft während der Zugkraft-Phase ist. Es ist daher vorteilhaft, wenn das Massenberechnungsverfahren nur dann aktiv ist, wenn die während der Zugkraft-Phase im Stufenwechselgetriebe eingelegte Gangstufe z_ISTGANG ein größeres Übersetzungsverhältnis zwischen Getriebeeingang und Getriebeausgang aufweist, als eine vorgebbare Grenzgangstufe #z_fw_max_gang.

Da Verbrennungsmotoren am unteren und am oberen Ende des zulässigen Drehzahlbereichs üblicherweise eine starke Abhängigkeit des Drehmoments von der Drehzahl aufweisen (Leerlaufregelung, Endabregelung), ist es weiterhin vorteilhaft, wenn das Massenberechnungsverfahren nur dann aktiv ist, wenn die Drehzahlen des Antriebsmotors während der Zugkraft-Phase größer als eine Mindestmotordrehzahl #n_ms_min und kleiner als eine maximale Motordrehzahl #n_ms_max sind.

Viele moderne Fahrzeuge verfügen über Radschlupferkennungs- bzw. -vermeidungssysteme, wie ABS oder ASR. Um Fehlmessungen zu vermeiden, ist es vorteilhaft, wenn das Massenberechnungsverfahren nur dann aktiv ist, wenn nicht an den Fahrzeugrädern ein erhöhter Schlupf erkannt wird, der durch die Statusgrößen z_ABS bzw. z_ASR angezeigt wird.

Da bei Kurvenfahrt ein erhöhter und sich rasch ändernder Fahrwiderstand auf das Fahrzeug einwirkt, ist es vorteilhaft, das Massenberechnungsverfahren nicht während der Kurvenfahrt durchzuführen. Der Fahrzustand "Kurvenfahrt" kann beispielsweise durch einen Lenkwinkelsensor oder ein entsprechendes Verfahren erkannt werden und wird durch die vom Algorithmus verwendete Größe z_kurve angezeigt.

Eine weitere Verbesserung der Ergebnisse kann erzielt werden, wenn das Massenberechnungsverfahren nur dann aktiv ist, wenn die Fahrzeuggeschwindigkeit während des Meßzeitraums größer ist als eine vorgebbare Mindestgeschwindigkeit #v_ms_min, da die Geschwindigkeitserfassung bei sehr kleinen Geschwindigkeiten ungenau sein kann. Die Eingangsgröße z_KUP steht für den Kupplungsstatus. Da im teilgeöffneten Zustand der Kupplung die Ermittlung der Zugkraft sehr schwierig ist, ist das Massenberechnungsverfahren nur dann aktiv, wenn die Kupplung während der zugkraftfreien Phase vollständig geöffnet und während der Zugkraft-Phase vollständig geschlossen ist.

Ein weiterer Zustand, der Fehlmessungen bewirken könnte ist, wenn eine Bremse des Fahrzeugs aktiv ist, was durch die Größen z_MBR_AN (Motorbremsstatus) und z_FBr (Status Betriebsbremse) angezeigt wird. Eine Ausgestaltung der Erfindung sieht vor, daß das Massenberechnungsverfahren nur dann aktiv ist, wenn nicht eine Bremse des Fahrzeugs aktiv und seit dem letzten Bremsvorgang mindestens die vorgebbare Totzeit #t_Br_tot abgelaufen ist.

Für eine Einrichtung zur Durchführung des erfindungsgemäßen Verfahrens, wird ebenfalls Schutz begehrt. Eine solche Einrichtung verfügt mindestens über eine elektronische Getriebesteuerung mit einem Speicherbereich und einem Auswertebereich, über erste Meßmittel zur Ermittlung der vom Antriebsmotor auf die Antriebsräder übertragenen Zugkraft und über zweite Meßmittel zur Ermittlung der Fahrzeuggeschwindigkeit.

Ein zur Bestimmung der Zugkraft verwendbares Motormomenten-Signal wird beispielsweise von einer elektronischen Motorsteuerung bereitgestellt.

**Patentansprüche**

1. Verfahren zur Ermittlung der Masse eines von mindestens einem Antriebsmotor angetriebenen Fahrzeugs, mit einem schaltbaren Stufenwechselgetriebe mit mehreren Gangstufen, das einerseits über eine als Anfahrelement dienende schaltbare Kupplung mit dem Antriebsmotor verbindbar ist und andererseits trieblich mit Antriebsrädern des Fahrzeugs verbunden ist, wobei das Verfahren mindestens zwei zeitlich versetzte Messungen innerhalb eines Meßzeitraums umfaßt, durch die jeweils mindestens eine, vom Antriebsmotor erzeugte, die auf die Antriebsräder des Fahrzeugs in Bewegungsrichtung einwirkende Zugkraft kennzeichnende Zugkraft-Größe und mindestens eine, die Bewegung des Fahrzeugs kennzeichnende Bewegungsgröße ermittelt wird, wobei eine der beiden Messungen während einer zugkraftfreien Phase erfolgt, während der die Kupplung zum Zweck einer Gang-Schaltung des Stufenwechselgetriebes geöffnet ist, und die andere der beiden Messungen während einer Zugkraft-Phase erfolgt, während der die Kupplung geschlossen ist und eine Zugkraft auf die Antriebsräder übertragen wird, und wobei mit den ermittelten Größen der beiden zeitlich versetzten Messungen eine aktuelle Masse des Fahrzeugs berechnet wird, **dadurch gekennzeichnet, daß** die erste der beiden Messungen einen ersten Datenerfassungszeitraum umfaßt, die zweite der beiden Messungen einen zweiten Datenerfassungszeitraum umfaßt, die Dauer der beiden Datenerfassungszeiträume größer ist als eine Mindestdauer, die Zugkraft-Größe dem zeitlichen Integral der während des jeweiligen Datenerfassungszeitraums wirkenden Zugkraft entspricht, und die Bewegungsgröße der während des jeweiligen Datenerfassungszeitraums erfolgten Geschwindigkeitsänderung des Fahrzeugs entspricht.

2. Verfahren zur Ermittlung der Masse eines von mindestens einem Antriebsmotor angetriebenen Fahrzeugs, mit einem schaltbaren Stufenwechselgetriebe mit mehreren Gangstufen, das einerseits über ein Anfahrelement mit dem Antriebsmotor verbindbar ist und andererseits trieblich mit Antriebsrädern des Fahrzeugs verbunden ist, wobei das Verfahren mindestens zwei zeitlich versetzte Messungen innerhalb eines Meßzeitraums umfaßt, durch die jeweils mindestens eine, vom Antriebsmotor erzeugte, die auf die Antriebsräder des Fahrzeugs in Bewegungsrichtung einwirkende Zugkraft kennzeichnende Zugkraft-Größe und mindestens eine, die Bewegung des Fahrzeugs kennzeichnende Bewegungsgröße ermittelt wird, wobei während der beiden Messungen unterschiedliche Zugkraft anliegt, und mit den ermittelten Größen der beiden zeitlich versetzten Messungen eine aktuelle Masse des Fahrzeugs berechnet wird, **dadurch gekennzeichnet, daß** die erste der beiden Messungen einen ersten Datenerfassungszeitraum umfaßt, die zweite der beiden Messungen einen zweiten Datenerfassungszeitraum umfaßt, die Dauer der beiden Datenerfassungszeiträume größer ist als eine Mindestdauer, die Zugkraft-Größe dem zeitlichen Integral der während des jeweiligen Datenerfassungszeitraums wirkenden Zugkraft entspricht, und die Bewegungsgröße der während des jeweiligen Datenerfassungszeitraums erfolgten Geschwindigkeitsänderung des Fahrzeugs entspricht, die erste Messung unmittelbar vor einer Gang-Schaltung erfolgt und die zweite Messung unmittelbar nach einer Gang-Schaltung erfolgt.

3. Verfahren nach Anspruch 1, **dadurch gekennzeichnet, daß** die zeitlich erste der beiden zeitlich versetzten Messungen während der Zugkraft-Phase und die zweite während der zugkraftfreien Phase erfolgt, um die Auswirkungen von Antriebsstrangschwingungen während der Zugkraft-Phase zu minimieren.

4. Verfahren nach Anspruch 1 oder 3, **dadurch gekennzeichnet, daß** das Massenberechnungsverfahren nur dann aktiv ist, wenn die Kupplung während der zugkraftfreien Phase vollständig geöffnet ist und während der Zugkraft-Phase vollständig geschlossen ist.

5. Verfahren nach einem der Ansprüche 1 bis 4, **dadurch gekennzeichnet, daß** bei der Berechnung der Masse des Fahrzeugs weiterhin eine Korrekturgröße berücksichtigt wird, die der Summe der Massenträgheitsmomente von Motor, Anfahrelement und Stufenwechselgetriebe reduziert auf die translatorische Bewegung des Fahrzeugs entspricht, und daß der Anteil des Stufenwechselgetriebes gangabhängig aus gespeicherten Wertepaaren (Kennlinie) ermittelt wird.

**6.** Verfahren nach einem der Ansprüche 1 bis 5, **dadurch gekennzeichnet, daß** das Massenberechnungsverfahren nur dann aktiv ist, wenn die während einer Zeitdauer zwischen dem Beginn des ersten und dem Beginn des zweiten Datenerfassungszeitraums zurückgelegte Wegstrecke einen bestimmten Wert nicht übersteigt, um sicherzustellen, daß die Veränderungen der fahrstreckenabhängigen Umgebungsbedingungen während der Messung begrenzt sind.

**7.** Verfahren nach einem der Ansprüche 1 bis 6, **dadurch gekennzeichnet, daß** die Geschwindigkeit an nicht angetriebenen Rädern des Fahrzeugs gemessen wird.

**8.** Verfahren nach einem der vorherigen Ansprüche, **dadurch gekennzeichnet, daß** die Massenberechnung nach Einschalten der Zündung des Fahrzeugs oder wenn eine vorgebbare Stillstandszeit abgelaufen ist, initialisiert wird.

**9.** Verfahren nach einem der vorherigen Ansprüche, **dadurch gekennzeichnet, daß** das Verfahren während eines Fahrzyklus mehrmals durchlaufen wird, wobei jeweils ein Einzelwert für die Fahrzeugmasse ermittelt wird, und daß der aktuelle Wert für die Fahrzeugmasse dem Mittelwert aus diesen Einzelwerten entspricht.

**10.** Verfahren nach einem der vorherigen Ansprüche, **dadurch gekennzeichnet, daß** die Anzahl der nach einer Initialisierung ermittelten Einzelwerte durch eine vorgebbare maximale Anzahl begrenzt wird, und nach Überschreiten der maximalen Anzahl der letzte aktuelle Wert der Fahrzeugmasse gültig bleibt.

**11.** Verfahren nach einem der vorherigen Ansprüche, **dadurch gekennzeichnet, daß** ein zulässiger Wertebereich für die ermittelten Einzelwerte durch eine minimale und eine maximale Plausibilitätsgrenze vorgebbar ist.

**12.** Verfahren nach einem der vorherigen Ansprüche, **dadurch gekennzeichnet, daß** das Massenberechnungsverfahren nur dann aktiv ist, wenn die während einer Zugkraft-Phase im Stufenwechselgetriebe eingelegte Gangstufe ein größeres Übersetzungsverhältnis zwischen Getriebe-Eingang und Getriebe-Ausgang aufweist als eine vorgebbare Grenz-Gangstufe.

**13.** Verfahren nach einem der vorherigen Ansprüche, **dadurch gekennzeichnet, daß** das Massenberechnungsverfahren nur dann aktiv ist, wenn die Drehzahlen des Antriebsmotors während einer Zugkraft-Phase größer als eine Mindest-Motordrehzahl und kleiner als eine maximale Motordrehzahl sind.

**14.** Verfahren nach einem der vorherigen Ansprüche, **dadurch gekennzeichnet, daß** das Massenberechnungsverfahren nur dann aktiv ist, wenn nicht an den Fahrzeugrädern ein erhöhter Schlupf erkannt wird.

**15.** Verfahren nach einem der vorherigen Ansprüche, **dadurch gekennzeichnet, daß** das Massenberechnungsverfahren nur dann aktiv ist, wenn nicht ein Fahrzustand "Kurvenfahrt" erkannt wird.

**16.** Verfahren nach einem der vorherigen Ansprüche, **dadurch gekennzeichnet, daß** das Massenberechnungsverfahren nur dann aktiv ist, wenn die Fahrzeuggeschwindigkeit während des Meßzeitraums größer ist als eine vorgebbare Mindestgeschwindigkeit.

**17.** Verfahren nach einem der vorherigen Ansprüche, **dadurch gekennzeichnet, daß** das Massenberechnungsverfahren nur dann aktiv ist, wenn nicht eine Bremse des Fahrzeugs aktiv ist.

**18.** Verfahren nach Anspruch 16, **dadurch gekennzeichnet, daß** das Massenberechnungsverfahren nach einem Bremsvorgang erst nach Ablauf einer vorgebbaren Totzeit wieder aktiviert wird.

**19.** Einrichtung, angepaßt zur Durchführung eines Verfahrens nach einem der vorhergehenden Ansprüche, mit einer elektronischen Getriebesteuerung, die einen Speicherbereich und einen Auswertebereich aufweist, mit ersten Meßmitteln zur Ermittlung der vom Antriebsmotor auf die Antriebsräder übertragenen Zugkraft und mit zweiten Meßmitteln zur Ermittlung der Fahrzeuggeschwindigkeit.

**Claims**

**1.** Method for determining the mass of a vehicle driven by at least one driving engine and equipped with a shiftable multistep variable-speed transmission, which on the one hand can be linked with the driving engine by means of a shiftable clutch serving as a starting element and on the other hand is drivingly connected with the vehicle's powered wheels, with the method comprising at least two temporally staggered measurements within a measuring period, by means of which in each case at least one driving-engine-produced variable of a traction force acting on the vehicle's powered wheels in the direction of movement and at least one kinetic variable defining vehicle motion is determined, with one of the two measurements being performed in a traction-free phase, during which the clutch is open for the purpose of a gearshift of the multistep variable-speed transmission, and the other one of the two measurements being performed in a traction phase, during which the clutch is closed and traction force is transmitted to the powered wheels, and with the variables determined by the temporally staggered measurements being used to calculate a current vehicle mass, **characterized in that** the first one of the two measurements comprises a first data acquisition period while the second one of the two measurements comprises a second data acquisition period; that the period of the two data acquisition periods exceeds a minimum period; that the traction variable is equivalent to the temporal integral of the traction acting during the respective data acquisition period; and that the kinetic variable corresponds to the change in vehicle speed during the respective data acquisition period.

2. Method for determining the mass of a vehicle driven by at least one driving engine and equipped with a shiftable multistep variable-speed transmission, which on the one hand can be linked with the driving engine by means of a starting element and on the other hand is drivingly connected with the vehicle's powered wheels, with the method comprising at least two temporally staggered measurements within a measuring period, by means of which in each case at least one driving-engine-produced variable of a traction force acting on the vehicle's powered wheels in the direction of movement and at least one kinetic variable defining vehicle motion is determined, with different traction applying during the two measurements, and with the variables determined by the temporally staggered measurements being used to calculate a current vehicle mass, **characterized in that** the first one of the two measurements comprises a first data acquisition period while the second one of the two measurements comprises a second data acquisition period; that the period of the two data acquisition periods exceeds a minimum period; that the traction variable is equivalent to the temporal integral of the traction acting during the respective data acquisition period; and that the kinetic variable corresponds to the change in vehicle speed during the respective data acquisition period; that the first measurement is performed immediately before a gearshift and the second measurement is performed immediately after a gearshift.

3. Method according to claim 1, **characterized in that** the temporally first one of the temporally staggered measurements is performed during the traction phase and the second one is performed during the traction-free phase for the effects of drive line vibration during the traction phase to be minimized.

4. Method according to claim 1 or 3, **characterized in that** the mass-computation process is only active if the clutch is completely open during the traction-free phase and completely closed during the traction phase.

5. Method according to one of the claims 1 through 4, **characterized in that** in the calculation of the vehicle's mass a correction quantity is taken into account, which is equivalent to the sum of the moments of inertia of engine, starting element and multistep variable-speed transmission reduced to the straight motion of the vehicle; and that the share of the multistep variable-speed transmission is gear-dependent and determined on the basis of stored pairs of variables (characteristic line).

6. Method according to one of the claims 1 through 5, **characterized in that** the mass-computation process is only active if the distance covered during a period between the start of the first and the start of the second data acquisition period does not exceed a certain value, which is to ensure limitation of changes in route-dependent ambient conditions during measurement.

7. Method according to one of the claims 1 through 6, **characterized in that** the speed on non-powered wheels of the vehicle is measured.

8. Method according to one of the preceding claims, **characterized in that** mass-computation is initiated after the ignition of the vehicle has been switched on or after expiration of a preset immobilization time.

9. Method according to one of the preceding claims, **characterized in that** the process is repeated several times during a driving cycle, with a single vehicle mass value being determined each time, and that the current vehicle mass value is equivalent to the mean value derived from these single values.

10. Method according to one of the preceding claims, **characterized in that** the number of single values determined after initialization is limited by a preset maximum number, and that when this maximum number is exceeded the latest current vehicle mass value will remain valid.

11. Method according to one of the preceding claims, **characterized** **in that** a permissible range for the single values determined can be preset by means of a minimum and a maximum plausibility limit.

12. Method according to one of the preceding claims, **characterized** **in that** the mass-computation process is only active if the gear engaged during a traction phase in the multistep variable-speed transmission features a higher ratio of transmission between transmission input and transmission output than a preset limit gear.

13. Method according to one of the preceding claims, **characterized** **in that** the mass-computation process is only active if the speeds of the driving engine during a traction phase are higher than a minimum engine speed and lower than a maximum engine speed.

14. Method according to one of the preceding claims, **characterized** **in that** the mass-computation process is only active if no elevated slip on the vehicle's wheels is detected.

15. Method according to one of the preceding claims, **characterized** **in that** the mass-computation process is only active if no "cornering" condition is detected.

16. Method according to one of the preceding claims, **characterized** **in that** the mass-computation process is only active if the vehicle speed during the measuring period exceeds a preset minimum speed.

17. Method according to one of the preceding claims, **characterized** **in that** the mass-computation process is only active if no brake of the vehicle is active.

18. Method according to claim 16, **characterized** **in that** the mass-computation process is only reactivated after a braking procedure after expiration of a preset response time.

19. An installation - adapted for the realization of a method according to one of the preceding claims - comprising an electronic transmission control unit, which features a memory area and an evaluation area, and first measuring means to determine the traction transmitted by the driving engine to the powered wheels and second measuring means to determine vehicle speed.

## Revendications

1. Procédé de détermination de la masse d'un véhicule entraîné par au moins un moteur d'entraînement, avec une boîte de vitesses à étages avec plusieurs étages de vitesses reliée, d'une part, par l'intermédiaire d'un embrayage servant d'élément de démarrage, avec le moteur d'entraînement et reliée, d'autre part, en entraînement avec les roues motrices du véhicule, le procédé comprenant au moins deux mesures décalées dans le temps à l'intérieur d'un temps de mesure, à l'aide desquelles une grandeur de force de traction caractérisant la force de traction produite par le moteur d'entraînement et exercée sur les roues motrices du véhicule dans la direction de déplacement, et au moins une grandeur de mouvement caractérisant le mouvement du véhicule, sont déterminées, une des deux mesures étant réalisée pendant une phase sans force de traction pendant laquelle l'embrayage est ouvert pour un enclenchement de la boîte de vitesses à étages et l'autre mesure étant réalisée pendant une phase avec force de traction pendant laquelle l'embrayage est fermé et une force de traction est transmise aux roues motrices, et une masse actuelle du véhicule étant calculée à l'aide des grandeurs déterminées lors des deux mesures décalées dans le temps, **caractérisé en ce que** la première des deux mesures comprend un premier temps de saisie des données, la deuxième mesure comprend un deuxième temps de saisie des données, la durée des deux temps de saisie des données est supérieure à une durée minimale, la grandeur de la force de traction correspond à l'intégrale dans le temps de la force de traction exercée pendant le temps de saisie des données correspondant, et la grandeur de mouvement correspond à la modification de la vitesse réalisée pendant le temps de saisie des données correspondant.

2. Procédé de détermination de la masse d'un véhicule entraîné par au moins un moteur d'entraînement, avec une boîte de vitesses à étages avec plusieurs étages de vitesses reliée, d'une part, par l'intermédiaire d'un embrayage servant d'élément de démarrage, avec le moteur d'entraînement et reliée, d'autre part, en entraînement avec les roues motrices du véhicule, le procédé comprenant au moins deux mesures décalées dans le temps à l'intérieur d'un temps de mesure, à l'aide desquelles une grandeur de force de traction caractérisant la force de traction produite par le moteur d'entraînement et exercée sur les roues motrices du véhicule dans la direction de déplacement, et au moins une grandeur de mouvement caractérisant le mouvement du véhicule, sont déterminées, une force de traction différente étant appliquée pendant les deux mesures et, à l'aide des grandeurs déterminées lors des deux mesures décalées dans le temps, une masse actuelle du véhicule étant calculée, **caractérisé en ce que** la première des deux mesures comprend un premier temps de saisie des données, la deuxième mesure comprend un deuxième temps de saisie des données, la durée des deux temps de saisie des données est supérieure à une durée minimale, la grandeur de la force de traction correspond à l'intégrale dans le temps de la force de traction exercée pendant le temps de saisie des données correspondant, et la grandeur de mouvement correspond à la modification de la vitesse réalisée pendant le temps de saisie des données correspondant, la première mesure est réalisée immédiatement avant l'enclenchement d'une vitesse et la deuxième mesure est réalisée immédiatement après l'enclenchement d'une vitesse.

3. Procédé selon la revendication 1, **caractérisé en ce que** la première, dans le temps, des deux mesures décalées dans le temps est réalisée pendant la phase avec force de traction et la deuxième est réalisée pendant la phase sans force de traction, afin de minimiser les effets des vibrations de la chaîne d'entraînement pendant la phase avec force de traction.

4. Procédé selon la revendication 1 ou 3, **caractérisé en ce que** le procédé de calcul de la masse n'est actif que lorsque l'embrayage est complètement ouvert pendant la phase sans force de traction et complètement fermé pendant la phase avec force de traction.

5. Procédé selon l'une des revendications 1 à 4, **caractérisé en ce que**, lors du calcul de la masse du véhicule, une grandeur de correction est prise en compte, qui correspond à la somme des moments d'inertie du moteur, de l'élément de démarrage et de la boîte de vitesses à étages, réduit au mouvement de translation du véhicule, et **en ce que** la part de la boîte de vitesses à étages est déterminée en fonction de la vitesse à partir de paires de valeurs enregistrées (courbe caractéristique).

6. Procédé selon l'une des revendications 1 à 5, **caractérisé en ce que** le procédé de calcul de la masse n'est actif que lorsque le trajet parcouru pendant un temps entre le début du premier temps de saisie des données et le début du deuxième temps de saisie des données ne dépasse pas une valeur déterminée afin de s'assurer que les changements de conditions de l'environnement qui dépendent du trajet soient limités pendant la mesure.

7. Procédé selon l'une des revendications 1 à 6, **caractérisé en ce que** la vitesse est mesurée au niveau des roues non entraînées du véhicule.

8. Procédé selon l'une des revendications précédentes, **caractérisé en ce que** le calcul de la masse est initialisé après le déclenchement de l'allumage du véhicule ou lorsqu'un temps de repos prédéterminé s'est écoulé.

9. Procédé selon l'une des revendications précédentes, **caractérisé en ce que** le procédé est répété plusieurs fois pendant un cycle de marche, une valeur individuelle étant déterminée à chaque fois pour la masse du véhicule, et **en ce que** la valeur actuelle correspond, pour la masse du véhicule, à la valeur moyenne de ces valeurs individuelles.

10. Procédé selon l'une des revendications précédentes, **caractérisé en ce que** le nombre de valeurs individuelles déterminées après une initialisation est limité à un nombre maximal prédéterminé et après le dépassement du nombre maximal, la dernière valeur actuelle de la masse du véhicule reste valable.

11. Procédé selon l'une des revendications précédentes, **caractérisé en ce qu'**un domaine de valeurs admissibles pour les valeurs individuelles peut être prédéterminé à l'aide d'une limite minimale et d'une limite maximale de plausibilité.

12. Procédé selon l'une des revendications précédentes, **caractérisé en ce que** le procédé de calcul de la masse n'est actif que lorsque la vitesse enclenchée pendant une phase avec force de traction dans la boîte de vitesses à étages présente un rapport de transmission, entre l'entrée de la boîte de vitesses et la sortie de la boîte de vitesses, supérieur à un étage de vitesse limite prédéterminé.

**EP 1 105 702 B1**

**13.** Procédé selon l'une des revendications précédentes, **caractérisé en ce que** le procédé de calcul de la masse n'est actif que lorsque les vitesses de rotation du moteur d'entraînement pendant une phase avec force de traction sont supérieures à une vitesse de rotation minimale du moteur et inférieures à une vitesse de rotation maximale du moteur.

**14.** Procédé selon l'une des revendications précédentes, **caractérisé en ce que** le procédé de calcul de la masse n'est actif que lorsqu'un patinage augmenté n'est pas détecté au niveau des roues du véhicule.

**15.** Procédé selon l'une des revendications précédentes, **caractérisé en ce que** le procédé de calcul de la masse n'est actif que lorsqu'un état de "marche en virage" n'est pas détecté.

**16.** Procédé selon l'une des revendications précédentes, **caractérisé en ce que** le procédé de calcul de la masse n'est actif que lorsque la vitesse du véhicule, pendant le temps de mesure, est supérieure à une vitesse minimale prédéterminée.

**17.** Procédé selon l'une des revendications précédentes, **caractérisé en ce que** le procédé de calcul de la masse n'est actif que lorsqu'un frein du véhicule n'est pas actif.

**18.** Procédé selon la revendication 16, **caractérisé en ce que** le procédé de calcul de la masse n'est à nouveau activé, après un processus de freinage, qu'après l'écoulement d'un temps mort prédéterminé.

**19.** Dispositif adapté à la réalisation d'un procédé selon l'une des revendications précédentes, avec une commande électronique de boîte de vitesses qui comporte une partie de mémoire et une partie d'analyse, avec des premiers moyens de mesure pour déterminer la force de traction transmise par le moteur d'entraînement aux roues motrices et avec des seconds moyens de mesure pour déterminer la vitesse du véhiculé.

Zugkraft:

$F_{Zug}$ [N]

$I_{01}$

10

2

Zeit

Fahrzeuggeschwindigkeit:

v [m/s]

$v_0$

$v_1$ $v_2$ $v_3$

4

$t_0$ $t_1$ $t_2$ $t_3$ Zeit

$k_0$ $k_1$ $k_2$ $k_3$

6 8

Fig.1

12

Fig. 2